Europäisches Patentamt

(19) European Patent Office

Office européen des brevets

(11) Numéro de publication: **0 041 459**
**A1**

(12) **DEMANDE DE BREVET EUROPEEN**

(21) Numéro de dépôt: **81400876.9**

(22) Date de dépôt: **01.06.81**

(51) Int. Cl.³: **C 22 B 34/24**
C 01 G 33/00, C 01 G 35/00

(30) Priorité: **02.06.80 CA 353218**

(43) Date de publication de la demande:
**09.12.81 Bulletin 81/49**

(84) Etats contractants désignés:
**BE DE FR GB SE**

(71) Demandeur: **GOUVERNEMENT DU QUEBEC**
**200, Chemin Ste-Foy**
**Québec(CA)**

(72) Inventeur: **Legault, Gilles**
**1559 Bossuet, Sainte Foy**
**Québec, G2E 4C9(CA)**

(74) Mandataire: **Levy, David et al,**
**c/o S.A. Fedit-Loriot 38, avenue Hoche**
**F-78008 Paris(FR)**

(54) Procédé de lixiviation d'un minerai de niobium et/ou de tantale contenant du calcium comme impureté principale.

(57) Procédé de lixiviation d'un minerai de niobium et/ou de tantale contenant du calcium comme impureté principale.

On traite directement et sans traitement préliminaire le minerai par un mélange d'acide sulfurique et d'acide fluorhydrique, de préférence dilués, de façon à insolubiliser le calcium sous forme de sulfate de calcium et à solubiliser le niobium et/ou le tantale sous forme d'oxyfluorure et empêcher ainsi la formation de quantités appréciables de fluorure de calcium. La source d'acide fluorhydrique est surtout constituée par le produit de la réaction de $CaF_2$ avec l'acide sulfurique. L'oxyfluorure de niobium et/ou de tantale obtenu par ce traitement est traité par extraction liquide-liquide et est éventuellement converti en oxyde.

Application notamment au traitement du pyrochlore.

EP 0 041 459 A1

Procédé de lixiviation d'un minerai de niobium et/ou de tantale contenant du calcium comme impureté principale.

L'invention concerne un procédé de lixiviation d'un minerai de niobium et/ou de tantale. Plus précisément, l'invention se rapporte à un procédé d'extraction de l'oxyde de niobium et/ou de tantale d'un concentré ou d'un minerai de niobium et/ou de tantale contenant du calcium comme impureté principale.

Les procédés actuels d'extraction de l'oxyde de niobium d'un concentré ou d'un minerai de niobium consistent à solubiliser l'oxyde de niobium par l'attaque aux acides concentrés. Les acides couramment employés sont l'acide fluorhydrique concentré ou l'acide sulfurique concentré. Les désavantages d'employer ces acides sont les suivants :

1°) Lorsque les minerais ou les concentrés de niobium contiennent du calcium, ce calcium réagit avec l'acide fluorhydrique pour former le $CaF_2$ qui est insoluble. Il y a alors une consommation excessive d'acide fluorhydrique due à la présence du calcium ;

2°) l'attaque à l'acide sulfurique concentré s'effectue à des températures de 200°C et le rapport de poids entre l'acide et le $Nb_2O_5$ doit être élevé pour qu'il y ait une bonne dissolution du niobium.

Compte tenu des désavantages mentionnés ci- dessus, l'art antérieur décrit la possibilité d'avoir recours à la fois à l'acide fluorhydrique et à l'acide sulfurique. Par exemple, dans le brevet U.S. numéro 3.972.710, émis le 3 août 1976, l'inventeur Horst Meyer décrit un procédé qui s'effectue en deux étapes. Dans une première étape, un minerai contenant du tantale et du niobium est traité par une solution contenant de l'acide fluorhydrique ou de l'acide silicofluorhydrique, ce qui permet de convertir les impuretés solubles dans l'acide en fluorure insoluble sans dissoudre le tantale ou le niobium. Dans une deuxième étape, on traite le résidu obtenu à la première étape soit par l'acide fluorhydrique concentré, soit par un mélange d'acide fluorhydrique et d'acide sulfurique concentrés pour dissoudre le tantale et le niobium. Il s'agit évidemment là d'un procédé assez complexe nécessitant deux étapes de traitement où les impuretés sont insolubilisées à la première étape et le niobium et le tantale, après séparation liquide-solide, sont solubilisés à la seconde étape par des acides concentrés.

D'autre part, dans une publication du Ministère de l'Energie, des Mines et des Ressources intitulée "The Production of High-Purity Niobium Oxide from Pyrochlore-Perovskite Concentrate" par F.J. Kelly et W.A. Gow, reprint series RS 24 from the Canadian Mining and Metallurgical Bulletin, August 1965, on décrit un traitement basé sur une première étape où l'on utilise l'acide sulfurique, suivie d'une deuxième étape où l'on utilise l'acide fluorhydrique, le tout très complexe et très élaboré.

La présente invention démontre qu'il y a intérêt à la mise au point d'un procédé direct d'attaque et de lixiviation d'un minerai de niobium et/ou de tantale qui soit simple tout en étant pratique.

Un objet de l'invention réside dans la mise en solution de l'oxyde de niobium par l'attaque d'un concentré ou d'un minerai de niobium par un mélange d'acides fluorhydrique et sulfurique à faible concentration.

De façon générale, l'invention concerne un procédé de lixiviation de minerai de niobium et/ou de tantale contenant du calcium comme impureté principale, caractérisé par le fait que l'on traite directement et sans étape préliminaire, ledit minerai par un mélange d'acide sulfurique et d'acide fluorhydrique de façon à insolubiliser le calcium sous forme de sulfate de calcium et à solubiliser le niobium et/ou le tantale sous forme d'oxyfluorure et empêcher la formation de quantité appréciable de fluorure de calcium.

Le minerai que l'on préfère utiliser est de préférence un concentré de pyrochlore.

Bien que les quantités d'acide sulfurique et d'acide fluorhydrique peuvent varier entre des maxima et des minima assez éloignés, on préfère utiliser des quantités de solution d'acide suffisantes pour solubiliser tout le niobium et tout le tantale.

De préférence, la quantité d'acide sulfurique représente au moins la quantité stoechiométrique nécessaire pour qu'il puisse réagir avec tout le calcium et le convertir en sulfate de calcium.

La quantité préférentielle d'acide fluorhydrique utilisée doit représenter au moins la quantité stoechiométrique pour réagir avec tout le $Nb_2O_5$ et/ou $Ta_2O_5$ contenu dans le minerai et transformer ces derniers en oxyfluorures.

Bien que la température de lixiviation ne soit pas critique, on préfère opérer entre environ 70°C et 90°C. En effet, si l'on opère à une température inférieure à 70°C, bien que l'on puisse obtenir les mêmes résultats, on se rend compte que la durée de la lixiviation est beaucoup trop longue.

En pratique, la lixiviation dure au moins 30 minutes bien que ce temps ne soit pas critique.

On obtient d'aussi bons résultats en effectuant la lixiviation au moyen du procédé selon l'invention lorsque l'on utilise de l'acide fluorhydrique dilué et de l'acide sulfurique dilué.

La demanderesse a maintenant découvert qu'il aurait avantage à ce que la source d'acide fluorhydrique soit constituée par le produit de la réaction de $CaF_2$ avec l'acide sulfurique.

La demanderesse a de plus constaté que l'on peut purifier l'oxyfluorure de niobium et/ou de tantale par extraction liquide-liquide. Elle a de plus constaté que l'oxyfluorure de niobium et/ou de tantale peut être converti en oxyde.

Selon une réalisation de l'invention, on sépare la partie insoluble contenant du sulfate de calcium, on fait subir une extraction liquide-liquide à la fraction contenant l'oxyfluorure de niobium et/ou de tantale, obtenant ainsi une première phase organique contenant l'oxyfluorure de niobium et/ou de tantale et une première phase aqueuse contenant l'acide fluorhydrique et l'acide sulfurique n'ayant pas réagi, ainsi qu'éventuellement des impuretés, on recircule la première phase aqueuse à l'étape initiale de mise en solution du niobium et/ou du tantale sous forme d'oxyfluorure de façon à remplacer au moins en partie le mélange d'acide fluorhydrique et d'acide sulfurique utilisé en tête de traitement, on réextrait l'oxyfluorure de niobium et/ou de tantale de la première phase organique obtenant ainsi une deuxième phase organique que l'on réintroduit à l'étape d'extraction liquide-liquide, et une deuxième phase aqueuse contenant l'oxyfluorure de niobium et/ou de tantale, on traite la deuxième phase aqueuse de façon à transformer l'oxyfluorure de niobium et/ou de tantale en oxyde de niobium et/ou de tantale hydraté, et à obtenir une solution contenant des ions $F^-$ et des ions $SO_4^{--}$, on calcine l'oxyde de niobium et/ou de tantale hydraté obtenant ainsi l'oxyde pur, on traite la solution contenant des ions $F^-$ et des ions $SO_4^{--}$ par le $Ca(OH)_2$ pour former principalement du $CaF_2$ dans des conditions empêchant le plus possible la formation de $CaSO_4$, on sépare le $CaF_2$ de la liqueur et on le recycle en tête de procédé avec suffisamment d'$H_2SO_4$ concentré pour le transformer en HF.

Lorsque le filtrat de la lixiviation contient du niobium et du tantale, on réextrait l'oxyfluorure de niobium et de tantale de la première phase organique en deux étapes distinctes et d'une façon sélective par une phase aqueuse appropriée, on traite séparément ces deux phases aqueuses, l'une de façon à transformer l'oxyfluorure de niobium en oxyde de niobium hydraté et en oxyde de niobium, et l'autre de façon à transformer l'oxyfluorure de tantale en oxyde de tantale hydraté et en oxyde de tantate.

De préférence, l'extraction liquide-liquide s'effectue avec la méthyl-isobutyl-cétone.

Quant au traitement direct du minerai, il est recommandé de l'effectuer avec un mélange d'acide sulfurique 6 à 12N et d'acide fluorhydrique 4 à 6N, de préférence un mélange d'acide sulfurique 10N et d'acide fluorhydrique 4N.

Selon une réalisation préférée de l'invention, la réextraction de l'oxyfluorure de niobium et/ou de tantale de la première phase organique s'effectue en milieu aqueux ou en milieu $H_2SO_4$N.

Selon une réalisation préférée de l'invention, on obtient l'oxyde de niobium et/ou de tantale hydraté de la deuxième phase aqueuse en traitant cette dernière avec de l'ammoniac.

De préférence, les ions $F^-$ et $SO_4^{--}$ sont présents dans la solution sous forme de $NH_4F$ et $(NH_4)_2SO_4$.

Le traitement de la solution contenant des ions $F^-$ et $SO_4^{--}$ par le $Ca(OH)_2$ s'effectue en pratique en maintenant le rapport $Ca(OH)_2/F^-$ entre 0,9 et 1,8, de préférence à environ 1,1, bien que cette condition ne soit pas de rigueur.

Le rhéogramme qui illustre l'invention montre diverses étapes de récupération de l'acide fluorhydrique par l'entremise du fluorure de calcium.

En se référant au schéma, on verra qu'à l'étape A, un concentré de $Nb_2O_5$ et/ou $Ta_2O_5$ est traité avec de l'acide sulfurique concentré tout en ajoutant du $CaF_2$ (étape M) lequel fut obtenu à l'étape L. L'acide sulfurique concentré réagit avec le $CaF_2$ pour produire de l'acide fluorhydrique qui servira, avec l'excès d'acide sulfurique, comme agent de lixiviation pour le concentré de $Nb_2O_5$ et/ou $Ta_2O_5$. Le mélange est filtré pour séparer un résidu contenant principalement du $CaSO_4$ (étape C). Le filtrat B est acidifié avec une quantité suffisante de HF et de $H_2SO_4$ pour donner une solution d'oxyfluorure de niobium et/ou de tantale qui est soumis à une extraction liquide-liquide en utilisant la méthyl-isobutyl-cétone (étape D) ; la phase aqueuse contenant un mélange de HF et de $H_2SO_4$ qui n'a pas réagi ainsi que des impuretés non nuisibles, par exemple Fe, Ti, Si, etc., est recyclée à l'étape de lixiviation. Ensuite, la phase organique obtenue par extraction liquide-liquide est traitée soit à l'eau, soit avec $H_2SO_4$ 1N pour permettre une réextraction liquide-liquide (étape F). La phase organique, lorsqu'elle contient aussi du $Ta_2O_5$ est réextraite, de façon à mettre en solution aqueuse, sous forme d'oxyfluorure, le tantale contenu avant de la recycler à l'étape d'extraction liquide-liquide (étape G). La phase aqueuse contenant l'oxyfluorure de niobium est traitée avec du $NH_4OH$ à l'étape H, pour précipiter l'oxyde de niobium hydraté (étape J) et pour donner une solution contenant du $NH_4F$ et du $(NH_4)_2SO_4$ (étape I). L'oxyde de niobium hydraté est ensuite calciné à l'étape K pour donner du $Nb_2O_5$. De même la liqueur de réextraction de $Ta_2O_5$ est traitée à l'ammoniaque pour précipiter l'oxyde hydraté qui est filtré et calciné pour produire l'oxyde de tantale pur. On ajoute du $Ca(OH)_2$ à la solution contenant du $NH_4F$ et du $(NH_4)_2SO_4$ pour donner du $CaF_2$ à l'étape L, lequel est recyclé à l'étape A, ainsi qu'un filtrat qui est rejeté.

L'invention va maintenant être illustrée à l'aide des exemples qui suivent.

### EXEMPLE 1

100 grammes de concentré de pyrochlore contenant 61,5 % de $Nb_2O_5$ sont lixiviés par un mélange d'acides fluorhydrique et sulfurique analysant 13,75 N de HF et 9,0 N de $H_2SO_4$. La lixiviation a été effectuée à 90°C pendant 1 heure. Après ce temps, la pulpe est filtrée. Le poids du résidu sec est de 41 grammes.

Les analyses du concentré avant la lixiviation et celles du résidu obtenu après la lixiviation du concentré sont (voir tableau ci-après) :

| Eléments | Concentré avant lixiviation | Résidu après lixiviation |
|---|---|---|
| $Nb_2O_5$ | 61,5 % | 1,08 % |
| CaO | 14,0 | 30 |
| $SiO_2$ | 2,6 | 3,9 |
| $TiO_2$ | 3,22 | 2,45 |
| $Fe_t$ | 1,61 | 1,23 |
| $Ta_2O_5$ | 0,15 | 0,04 |
| SrO | 1,08 | 2,63 |
| $ZrO_2$ | 0,87 | 2,12 |

D'autres exemples ont été réalisés dans les mêmes conditions que l'exemple 1 et sont résumés au tableau qui suit.

TABLEAU

| Essai No. | Quantité de concentré ($g^*$) | Volume d'acides (ml) | Norme HF (N) | Norme $H_2SO_4$ (N) | Température (°C) | Temps (min.) | Rendement (%) |
|---|---|---|---|---|---|---|---|
| 2 | 100 | 300 | 13,75 | 9,0 | 80° | 50 | 99,2 |
| 3 | 100 | 300 | 10,8 | 9,0 | 85° | 60 | 99,4 |
| 4 | 100 | 300 | 8,0 | 9,0 | 85° | 60 | 97,0 |
| 5 | 100 | 300 | 9,3 | 9,0 | 90° | 60 | 97,9 |
| 6 | 100 | 300 | 9,3 | 9,0 | 80° | 50 | 95,1 |

\* Concentré analysant 61,5 % de $Nb_2O_5$ et 14 % de CaO.

On se rendra compte qu'en utilisant un mélange d'acides fluorhydrique et sulfurique, il est possible de solubiliser tout le niobium sous la forme d'oxyfluoro-niobium et tout le tantale sous la forme d'oxyfluoro-tantale et de former du sulfate de calcium insoluble, ce qui permet de minimiser la consommation de l'acide fluorhydrique.

D'autre part, en utilisant des quantités stoechiométriques d'acide fluorhydrique, on verra que cette valeur est passablement inférieure à la quantité requise dans les procédés utilisant l'acide fluorhydrique seulement.

Quant au temps de réaction qui peut être aussi bas que 30 minutes, il est de même beaucoup inférieur au temps de réaction des procédés employant de l'acide fluorhydrique seulement.

En pratique, on verra que la lixiviation du minerai ou d'un concentré de niobium et/ou de tantale s'effectue par un mélange d'acides fluorhydrique et sulfurique dans un rapport de volume d'acide et de poids du solide de préférence égal à 3. Quant au rapport du poids d'acide fluorhydrique et du poids d'oxyde de niobium et d'oxyde de tantale contenu dans le minerai ou le concentré de niobium et/ou de tantale, celui-ci peut varier entre 1 à 1,5. De même, le rapport du poids de l'acide sulfurique et du poids des éléments autres que l'oxyde de niobium contenu dans le minerai ou le concentré de niobium et/ou de tantale, il peut varier entre 2 et 5.

Comme cela est bien connu, après lixiviation la pulpe est filtrée. Le filtrat contient au moins 95 à près de 100 % du $Nb_2O_5$ et du $Ta_2O_5$ contenu dans le minerai ou le concentré de niobium et/ou de tantale notamment sous forme d'oxyfluoro-niobium de formule $H_2NbOF_5$. Le résidu contient la majeure partie du

11

calcium sous forme de sulfate de calcium.

Le niobium et/ou le tantale peuvent être extraits de la solution par une extraction liquide-
liquide.

La liqueur pauvre d'une telle extraction peut
être recirculée à la lixiviation après concentration.

Dans les exemples qui suivent on montre les
avantages d'un procédé cyclique.

EXEMPLE 7

50 grammes d'un concentré de $Nb_2O_5$ sont lixiviés par un mélange d'acides fluorhydrique et sulfurique analysant 4,2 N de HF et 10 N de $H_2SO_4$. La lixiviation a été effectuée à 90°C pendant une heure.
Après ce temps, la pulpe est filtrée. On se rend compte que 75,6 % de $Nb_2O_5$ ont été solubilisés.

EXEMPLE 8

50 grammes d'un concentré de $Nb_2O_5$ ont été
traités tel que dans l'exemple 7 avec 300 ml d'une
liqueur analysant 4,2 N de HF et 10 N de $H_2SO_4$, ainsi
qu'avec 72 grammes de $CaF_2$. 87,3 % de $Nb_2O_5$ ont été
solubilisés.

EXEMPLE 9

50 grammes d'un concentré de $Nb_2O_5$ ont été
traités tel que dans l'exemple 7 avec 300 ml d'une
liqueur analysant 4,2 N de HF et 10 N de $H_2SO_4$, 75
grammes de $CaF_2$ et 50 ml d'acide sulfurique concentré. 94,2 % de $Nb_2O_5$ ont été solubilisés.

EXEMPLE 10

50 grammes d'un concentré de $Nb_2O_5$ ont été
traités tel que dans l'exemple 7 avec 300 ml d'une
liqueur analysant 4,2 N de HF et 10 N de $H_2SO_4$,
75 grammes de $CaF_2$ et 100 ml d'acide sulfurique concentré. 95 % de $Nb_2O_5$ ont été solubilisés.

Ces exemples montrent définitivement les
avantages d'utiliser le procédé cyclique en se

servant de $CaF_2$ et d'acide sulfurique concentré en plus de la liqueur contenant les deux acides.

Il a de plus été trouvé que les quantités de $Ca(OH)_2$ ajoutées à la solution contenant des ions $F^-$ et $SO_4^{2-}$ peuvent varier. Cependant, dans certaines conditions, on obtient des résultats améliorés. Par exemple, dans les exemples 5 à 9 qui ont été résumés au tableau I, on verra que les meilleurs résultats en ce qui regarde le $CaF_2$ et le $CaSO_4$ ont été obtenus lorsque le rapport entre le $Ca(OH)_2$ et les ions $F^-$ sont dans le voisinage de 1,1.

TABLEAU I

| Exemple No. | Rapport $Ca(OH)_2/F$ | $CaF_2$ | $CaSO_4$ |
|---|---|---|---|
| 5 | 0,9 | 26,5 g | 7,05 g |
| 6 | 1,09 | 43,9 | 8,88 |
| 7 | 1,36 | 45,9 | 18,6 |
| 8 | 1,64 | 45,9 | 30,67 |
| 9 | 1,8 | 45,9 | 39,6 |

On verra que lorsque le rapport augmente, la quantité de $CaF_2$ augmente mais qu'au-dessus de 1,1, la quantité de $CaSO_4$ est excessive.

1

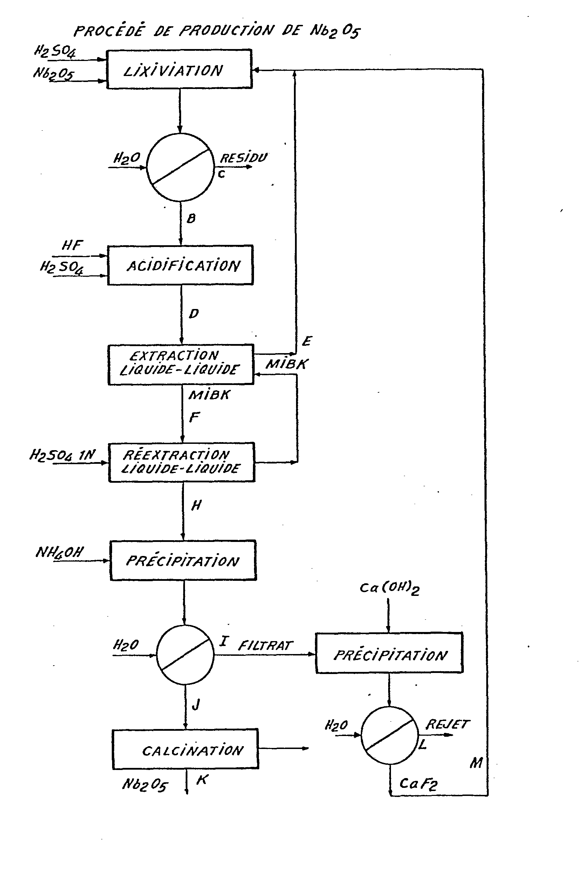

REVENDICATIONS

1. Procédé de lixiviation d'un minerai de niobium et/ou de tantale contenant du calcium comme impureté principale, caractérisé par le fait que l'on traite directement et sans traitement préliminaire ledit minerai par un mélange d'acide sulfurique et d'acide fluorhydrique de façon à insolubiliser le calcium sous forme de sulfate de calcium, à solubiliser le niobium et/ou le tantale sous forme d'oxyfluorures et à empêcher ainsi la formation de quantité appréciable de fluorure de calcium.

2. Procédé selon la revendication 1, caractérisé par le fait que le minerai de départ est un concentré de pyrochlore.

3. Procédé selon la revendication 1, caractérisé par le fait que l'on utilise une quantité suffisante de solution d'acide sulfurique et d'acide fluorhydrique pour solubiliser tout le niobium.

4. Procédé selon la revendication 1, caractérisé par le fait que l'acide sulfurique est utilisé en quantité au moins stoechiométrique pour réagir avec tout le calcium et le convertir en sulfate de calcium.

5. Procédé selon la revendication 1, caractérisé par le fait que l'acide fluorhydrique est utilisé en quantité au moins stoechiométrique pour réagir avec tout le $Nb_2O_5$ et/ou $Ta_2O_5$ contenu dans le minerai.

6. Procédé selon la revendication 1, caractérisé par le fait que la température de lixiviation varie entre 70° et 90°C.

7. Procédé selon la revendication 1, caractérisé par le fait que l'on utilise un mélange d'acide sulfurique et d'acide fluorhydrique dilués.

8. Procédé de lixiviation d'un concentré de pyrochlore, caractérisé par le fait que l'on traite directement ledit concentré sous forme pulvérisée par un mélange d'acides fluorhydrique et sulfurique analysant 10,8 N de HF et 9,0 N de $H_2SO_4$, à une température d'environ 90°C et durant une heure, et transforme ainsi pratiquement tout le niobium en oxyfluorure de niobium soluble.

9. Procédé de lixiviation d'un minerai de niobium et/ou de tantale contenant du calcium comme impureté principale, dans lequel on traite directement et sans traitement préliminaire ledit minerai par un mélange d'acide sulfurique et d'acide fluorhydrique de façon à insolubiliser le calcium sous forme de sulfate de calcium, à solubiliser le niobium et/ou le tantale sous forme d'oxyfluorures et à empêcher ainsi la formation de quantité appréciable de fluorure de calcium, caractérisé par le fait que l'on purifie l'oxyfluorure de niobium et/ou de tantale par extraction liquide-liquide.

10. Procédé selon la revendication 9, caractérisé par le fait que le minerai de niobium et/ou de tantale est un concentré de pyrochlore.

11. Procédé selon la revendication 9, caractérisé par le fait que la source de HF est le produit de la réaction de $CaF_2$ avec $H_2SO_4$ concentré.

12. Procédé de lixiviation d'un minerai de niobium et/ou de tantale contenant du calcium comme impureté majeure, caractérisé par le fait que l'on traite directement et sans traitement préliminaire ledit minerai par un mélange d'acide sulfurique et d'acide fluorhydrique de façon à insolubiliser le calcium sous forme de sulfate de calcium, à solubiliser le niobium et/ou le tantale sous forme d'oxyfluorure et à empêcher la formation de quantité appréciable de fluorure de calcium, que l'on sépare de la partie insoluble contenant du sulfate de calcium, que

3

l'on fait subir une extraction liquide-liquide à la fraction contenant l'oxyfluorure de niobium et/ou de tantale, obtenant ainsi une première phase organique contenant l'oxyfluorure de niobium et/ou de tantale et une première phase aqueuse contenant l'acide fluorhydrique et l'acide sulfurique n'ayant pas réagi, ainsi qu'éventuellement des impuretés, que l'on recircule la première phase aqueuse à l'étape initiale de mise en solution du niobium et/ou de tantale sous forme d'oxyfluorure, de façon à remplacer au moins en partie le mélange d'acide fluorhydrique et d'acide sulfurique utilisé en tête de traitement, que l'on ré-extrait l'oxyfluorure de niobium de la première phase organique et subséquemment l'oxyfluorure de tantale, régénérant ainsi le solvant organique que l'on réintroduit à l'étape d'extraction liquide-liquide et deux phases aqueuses, l'une contenant l'oxyfluorure de niobium et l'autre l'oxyfluorure de tantale, que l'on traite séparément les deux phases aqueuses de façon à transformer l'oxyfluorure de niobium en oxyde de niobium hydraté pour l'une et l'oxyfluorure de tantale en oxyde de tantale hydraté pour l'autre, et obtenir une solution contenant des ions $F^-$ et des ions $SO_4^{--}$, que l'on calcine séparément les oxydes hydratés de niobium et de tantale pour produire les oxydes purs, que l'on traite la solution contenant des ions $F^-$ et des ions $SO_4^{--}$ par le $Ca(OH)_2$ pour former principalement du $CaF_2$ dans des conditions empêchant le plus possible la formation de $CaSO_4$, que l'on sépare le $CaF_2$ de sa solution et qu'on le recycle en tête de procédé avec suffisamment d'$H_2SO_4$ concentré pour le transformer en HF.

13. Procédé selon la revendication 12, caractérisé par le fait que l'extraction liquide-liquide s'effectue avec la méthyl-isobutyl-cétone.

14. Procédé selon la revendication 12, caractérisé par le fait que le traitement direct du minerai s'effectue avec un mélange d'acide sulfurique 6 à 12 N et l'acide fluorhydrique 4 à 6 N.

15. Procédé selon la revendication 14, caractérisé par le fait que l'on utilise un mélange d'acide sulfurique 10 N et d'acide fluorhydrique 4 N.

16. Procédé selon la revendication 12, caractérisé par le fait que la réextraction de l'oxyfluorure de niobium et/ou de tantale de la première phase organique s'effectue avec un milieu aqueux.

17. Procédé selon la revendication 16, caractérisé par le fait que le milieu aqueux contient $H_2SO_4$ N.

18. Procédé selon la revendication 12, caractérisé par le fait que l'on traite la deuxième phase aqueuse avec de l'ammoniac obtenant ainsi l'oxyde de niobium et/ou de tantale.

19. Procédé selon la revendication 12, caractérisé par le fait que les ions $F^-$ et $SO_4^{--}$ sont présents dans la solution sous forme de $NH_4F$ et $(NH_4)_2SO_4$.

20. Procédé selon la revendication 12 ou 19, caractérisé par le fait que le traitement de la solution contenant des ions $F^-$ et $SO_4^{--}$ par le $Ca(OH)_2$ s'effectue en maintenant le rapport $Ca(OH)_2/F^-$ entre 0,9 et 1,8.

21. Procédé selon la revendication 12 ou 19, caractérisé par le fait que le traitement de la solution contenant des ions $F^-$ et $SO_4^{--}$ par le $Ca(OH)_2$ s'effectue en maintenant le rapport $Ca(OH)_2/F^-$ à environ 1,1.

PROCÉDÉ DE PRODUCTION DE $Nb_2O_5$

## Office européen des brevets

# RAPPORT DE RECHERCHE EUROPEENNE

EP 81 40 0876.9

## DOCUMENTS CONSIDERES COMME PERTINENTS

| Catégorie | Citation du document avec indication, en cas de besoin, des parties pertinentes | Revendication concernée |
|---|---|---|
| | <u>GB - A - 1 066 016</u> (L'ROCHE G. BOUSQUET)<br>* revendications 1 à 10; page 1,<br>lignes 34 à 68 *<br>-- | 1,9,11,<br>13 |
| | <u>GB - A- 1 066 015</u> (L'ROCHE G. BOUSQUET)<br>* en entier *<br>-- | 1,9,<br>11 |
| | <u>US - A - 3 107 976</u> (E.L. KOERNER et al.)<br>* revendication 1 *<br>-- | 1 |
| D | <u>US - A - 3 972 710</u> (H. MEYER)<br>* revendications 1 à 4 *<br>-- | 1 |
| A | <u>DE - B2 - 2 214 817</u> (UNION CARBIDE CORP.)<br>-- | |
| A | <u>BE - A - 760 667</u> (KAWECKI BERYLCO INDUSTRIES)<br>---- | |

**CLASSEMENT DE LA DEMANDE (Int. Cl.³)**

C 22 B 34/24
C 01 G 33/00
C 01 G 35/00

**DOMAINES TECHNIQUES RECHERCHES (Int. Cl.³)**

C 01 G 33/00
C 01 G 35/00
C 22 B 34/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

[X] Le présent rapport de recherche a été établi pour toutes les revendications

| Lieu de la recherche | Date d'achèvement de la recherche | Examinateur |
|---|---|---|
| Berlin | 24-08-1981 | ASSOGNA |